# FASCICULE DE BREVET EUROPEEN

(11) **EP 1 669 778 B1**
(45) Date de publication et mention de la délivrance du brevet: **12.03.2008**
(21) Numéro de dépôt: 05292529.4
(22) Date de dépôt: 28.11.2005
(51) Int. Cl.: G01V 1/28

(54) **Méthode pour déterminer de l'information spéculaire dans l'imagerie sismique avant sommation**
Verfahren zur Bestimmung von Spiegelinformation bei der seismischen Bildbestimmung und vor Summation
Method for determining specular information from seismic imaging before stacking

(30) Priorité: 07.12.2004 FR 1300003
(43) Date de publication de la demande: 14.06.2006
(73) Titulaire: Institut Français du Pétrole, 92852 Rueil Malmaison Cédex (FR)
(72) Inventeur: Broto, Karine, 92500 Rueil-Malmaison (FR); Nicoletis, Laurence, 92500 Rueil-Malmaison (FR); Rakotoarisoa, Héry, 78450 Villepreux (FR)

(56) Documents cités:
- WO-A-00/54074
- FR-A- 2 755 243
- US-A1- 2002 183 980
- BLEISTEIN: "On the imaging of reflectors in the earth" GEOPHYSICS, SOCIETY OF EXPLORATION GEOPHYSICISTS. TULSA, US, vol. 52, no. 7, 1 juillet 1987 (1987-07-01), pages 931-942, XP002095154 ISSN: 0016-8033
- BLEISTEIN N. ET AL.: "True-amplitude transformation to zero offset of data from curved reflectors" GEOPHYSICS,SOCIETY OF EXPLORTION GEOPHYSICISTS.TULSA,US, vol. 64, no. 1, 1 janvier 1999 (1999-01-01), - 28 février 1999 (1999-02-28) pages 112-129, XP002276525

## Description

L'invention concerne de façon générale le traitement de données sismiques, et plus particulièrement la présente invention permet d'accéder à des informations, dites informations spéculaires, après transformation des enregistrements sismiques temporels dans le domaine profondeur. Cette migration en profondeur est effectuée à l'aide d'un algorithme de migration en profondeur avant sommation de type Kirchhoff dans le but d'imager une zone souterraine.

Ces quantités peuvent être utilisées, directement ou comme intermédiaires, pour des algorithmes de mise à jour du modèle de vitesse d'une zone souterraine tels que des algorithmes de tomographie.

La sismique réflexion est largement utilisée en exploration pétrolière. Cette technique fournit des informations temporelles relatives au sous-sol, à partir de l'information contenue dans les ondes sismiques qui se sont propagées et réfléchies sur les discontinuités géologiques du milieu. Par approximation, on considère que la propagation et la réflexion de l'onde sismique sont approximées par des rayons qui se propagent dans un domaine de vitesse complexe, et se réfléchissent sur un réflecteur (interfaces géologiques ou hétérogénéités diverses d'une partie de la subsurface) conformément à la loi de Snell.

Les méthodes d'imagerie sismique utilisent l'information cinématique associée aux réflexions sismiques, c'est à dire les temps d'arrivée des ondes, pour déterminer une représentation en vitesses du sous-sol.

A partir de ces informations sur la vitesse du sous-sol, il est possible de transformer une image temporelle du sous-sol en une image en profondeur, à l'aide d'un algorithme dit de migration profondeur. Cette technique consiste, dans un premier temps, à définir les paramètres géométriques de l'image en profondeur souhaitée du sous-sol. Cette image est constituée d'un ensemble de points, appelés "points image". Puis, dans un second temps, on associe à chaque point image les informations sismiques temporelles (amplitudes) associées.

Le terme "spéculaire" est souvent utilisé au cours de la description. C'est un adjectif indiquant une relation avec une réflexion spéculaire, c'est à dire, une réflexion pour laquelle la majorité du signal est réfléchi en accord avec les lois de l'optique géométrique. Ainsi, on appelle "rayon spéculaire" d'un point image d'une classe avant sommation, le rayon, parmi tous ceux ayant atteint le même point image, qui a contribué de façon constructive à l'imagerie en ce point et qui vérifie les lois de Snell-Descartes en réflexion lorsque le point image est sur un réflecteur.

Par "information spéculaire", on entend donc toute information, ayant un sens physique ou non, et que l'on associe à un rayon spéculaire. Cette information correspond par exemple aux coordonnées du couple source/récepteur du rayon spéculaire, au temps de trajet de ce rayon spéculaire, à l'angle d'incidence du rayon spéculaire, aux dérivées partielles du temps de trajet du rayon spéculaire par rapport au modèle de vitesse utilisé pour l'algorithme de migration.

### État de la technique

Les documents suivants que l'on va citer dans le cours de la description ci-après, illustrent l'état de la technique :
- Stork, C., 1992, Reflection tomography in the postmigrated domain: Geophysics, 57, 680-692
- Bishop , T. N., Bube, K.P., 1985, Tomographic determination of velocity and depth in laterally varying media: Geophysics, 50, no.6, 903-923
- Ehinger, A., and Lailly, P., 1995, Velocity model determination by the SMART method, Part 1: Theory: 65th Ann. Internat. Mtg., Soc. Expl. Geophys., Expanded Abstracts, pages 739-742.
- Bleistein, N., 1987, On the imaging of the reflectors in te earth : Geophysics, 52 (7), 931-942
- Schneider, W.A., 1978, Integral formulation for migration in two and three dimensions: Geophysics, 43, 49-76
- FR 2755243 décrit une méthode de migration avant sommation.

La migration avant sommation est une méthode classique de traitement de données sismiques. De façon générale la technique consiste, connaissant la valeur d'un champ d'ondes à une profondeur connue, par exemple en surface, ainsi qu'un modèle de la répartition des vitesses de propagation des ondes dans la zone souterraine, à modéliser la propagation du champ source et la retropropagation des données de réflexion enregistrées et à chercher des cohérences de phase entre ces deux champs modélisés.

Si l'on dispose d'un modèle de vitesse du sous-sol correct, la migration profondeur construit une image en profondeur, sur laquelle une interprétation structurale de la subsurface pourra être réalisée, par un géologue par exemple. Cette image en profondeur du sous-sol est généralement appelée "image migrée en profondeur". En trois dimensions, l'on parle de cube migré en profondeur.

Dans le cas contraire, c'est à dire si l'on ne dispose pas d'un modèle de vitesse du sous-sol correct, la migration profondeur permet d'une part, d'évaluer la qualité d'un modèle de vitesse, et d'autre part, de produire une information permettant d'améliorer ce modèle de vitesse. Parmi les méthodes permettant d'exploiter cette information issue de la migration profondeur pour la mise à jour du modèle de vitesse, figurent les méthodes tomographiques.

Dans le domaine dit "avant sommation", c'est à dire avant de sommer les enregistrements temporels issus de différents déports ("offsets"), il existe deux grands types de tomographie : les tomographies dites "tomographies profondeur avant sommation", et les tomographies dites "tomographies temps avant sommation".

Ainsi, les tomographies profondeur avant sommation (Stork, 1992) reposent sur le fait que, si le modèle de vitesse utilisé pour une migration profondeur avant sommation est correct, alors les événements sismiques apparaissent plats dans les collections "iso-x" (sections à une position latérale donnée dans le cube migré en profondeur). Si tel n'est pas le cas, l'information contenue dans les collections iso-x, c'est-à-dire la variabilité en fonction du déport de l'image du réflecteur, est exploitée afin de mettre à jour le modèle de vitesse du sous-sol. Toutefois, pour exploiter correctement cette information, il est nécessaire de disposer des coordonnées des sources et récepteurs qui ont contribués de façon constructive à l'image du réflecteur en chaque point de la collection iso-x considérée. Or, après une migration profondeur, cette information dite "spéculaire" est inconnue.

Les tomographies temps avant sommation (Bishop et al., 1985) se heurtent à la même difficulté. En effet, dans le cas de structures complexes, l'accès aux données d'entrée de ces méthodes, c'est-à-dire des temps de trajet avant sommation, peut être difficile voire impossible directement dans le domaine temporel. Dans de tels cas, on aura recours à un détour dans le domaine migré en profondeur, suivi d'une étape dite de démigration cinématique afin de transformer cette information recueillie dans le domaine profondeur en une information temporelle (Ehinger et Lailly, 1995). Or, l'étape de démigration consiste en un tracé de rayons à partir d'un point image considéré dans le domaine migré en profondeur avant sommation vers les sources et récepteurs spéculaires, qui sont ici, de nouveau, des quantités inconnues après migration.

Ainsi, que ce soit dans le domaine profondeur ou le domaine temps, l'accès aux coordonnées spatiales des sources et récepteurs spéculaires d'une image sismique est donc nécessaire pour les méthodes de mise à jour du modèle de vitesse qui exploitent l'information recueillie dans le domaine migré en profondeur telles que les méthodes tomographiques. Or, les algorithmes de migration en profondeur perdent cette information au cours de la migration.

Des solutions sont actuellement en cours de développement dans l'industrie. Ces solutions, dérivées de la théorie de la phase stationnaire, consistent à effectuer différentes migrations, en utilisant les mêmes données et le même modèle de vitesse, mais pour des opérateurs de migration différents (Bleistein, 1987). Plus précisément, en plus du cube migré profondeur classiquement calculé, on calcule d'autres cubes en pondérant l'opérateur de migration même par les quantités que l'on souhaite retrouver (par exemple, la position des sources et la position des récepteurs). Puis, en effectuant le rapport entre le cube classique et les cubes pondérés, on obtient une estimation des quantités spéculaires recherchées. Cette approche présente principalement deux inconvénients. Tout d'abord, cette technique peut s'avérer coûteuse en temps de calcul dans la mesure où plusieurs migrations (autant que de quantités spéculaires souhaitées) sont à effectuer. Par ailleurs, cette approche peut conduire à des valeurs de quantités spéculaires erronées dans le cas où le rapport signal sur bruit est faible, mais aussi dans les zones où les amplitudes sont faibles, ce qui peut se produire dans le cas de structures complexes.

Nous proposons ici une nouvelle approche pour accéder à des quantités spéculaires après migration en profondeur avant sommation des enregistrements sismiques temporels, quantités nécessaires notamment à la mise à jour du modèle de vitesse d'ondes sismiques.

### La méthode selon l'invention

L'invention concerne une méthode permettant de déterminer les couples sources/récepteurs spéculaires associés à des points image. Ces points image sont issus d'une ou plusieurs images d'une formation souterraine obtenues à partir d'enregistrements multi-déports en fonction du temps d'ondes sismiques, émises et captées par un dispositif d'acquisition comprenant des sources sismiques et des récepteurs sismiques couplés en surface avec ladite formation souterraine, ces ondes sismiques étant réfléchies par des interfaces géologiques de ladite formation. La méthode comporte les étapes suivantes :
a) on définit une sélection de points image desdites images de ladite formation comprenant au moins un point image et ses voisins (pour pouvoir déterminer ultérieurement une pente locale d'au moins un événement) ;
b) on réalise une migration en profondeur avant sommation (de type Kirchhoff) pour ladite sélection de points image dans laquelle l'on détermine et l'on stocke des données relatives aux sources et récepteurs dudit dispositif d'acquisition ainsi que les paramètres de rais des rayons définis entre tous couples source/point image et les paramètres de rais des rayons définis entre tous couples récepteur/point image ;
   et, pour au moins un point image de ladite sélection on réalise les étapes suivantes :
c) on détermine, pour ledit point image, la pente locale d'au moins un événement sismique correspondant à des réflexions impactant une desdites interfaces géologiques de ladite formation ;
d) on détermine les couples source/récepteur spéculaires associés audit point image, en comparant ladite pente locale associée audit point image audits paramètres de rais associés audit point image.

Selon l'invention, on peut déterminer les couples source/récepteur spéculaires associés audit point image, en sélectionnant parmi tous les couples source/récepteur du dispositif d'acquisition ceux dont le vecteur formé par la somme des paramètres de rais associés audit point image (ce vecteur étant appelé pendage de migration) est le plus colinéaire à la normale à ladite pente locale associée audit point image.

Les données stockées au cours de ladite migration à l'étape b) peuvent comporter au moins l'une des informations suivantes :
- les temps de trajets des rayons définis entre tous couples source/point image et tous couples récepteur/point image ;
- les coordonnées des sources et récepteurs du dispositif d'acquisition ;
- pour tous points image, les pendages de migration associés aux couples source/récepteur ayant contribués à l'imagerie du point image ;
- les dérivées partielles desdits temps de trajet par rapport à un modèle de vitesse utilisé pour la mise en oeuvre de l'algorithme de migration profondeur avant sommation ;
- toutes combinaisons de ces données.

Selon l'invention, ces données stockées au cours de l'étape b) peuvent être associées à chaque couple spéculaire et stockées au cours de l'étape d).

Les pentes locales utilisées par la méthode peuvent être déterminées à partir d'une interprétation d'un événement sismique.

Selon l'invention, pour accélérer les calculs, les paramètres de rais et les données relatives aux sources et récepteurs dudit dispositif peuvent être calculés et stockés pour une représentation décimée des points image et une représentation également décimée des sources et récepteurs du dispositif d'acquisition. La reconstitution de l'ensemble de ces données peut être réalisée à partir d'interpolations et/ou d'extrapolations.

La méthode selon l'invention peut, par exemple, être appliquée à la mise à jour d'un modèle de répartition des vitesses de propagation desdites ondes sismiques dans ladite zone souterraine. Pour ce faire, on peut utiliser une technique de tomographie en profondeur pour mettre à jour le modèle, ou bien encore une technique de tomographie en temps.

Selon l'invention, si l'on utilise une technique de tomographie en profondeur, on peut déterminer les dérivées partielles desdits temps de trajet par rapport à un modèle de vitesse utilisé pour la mise en oeuvre de l'algorithme de migration profondeur avant sommation, nécessaires à ladite technique de tomographie en profondeur, en évaluant et en stockant l'information sur les dérivées à l'étape b).

De même, si l'on utilise une technique de tomographie en temps, on peut déterminer les temps de trajet nécessaires à ladite technique de tomographie en temps en stockant l'information sur les temps de trajet à l'étape b).

### Présentation succincte des figures

Les caractéristiques et avantages de la méthode selon l'invention, apparaîtront plus clairement à la lecture de la description ci-après d'exemples non limitatifs de mise en oeuvre, en se référant à la figure annexée et décrite ci-après.

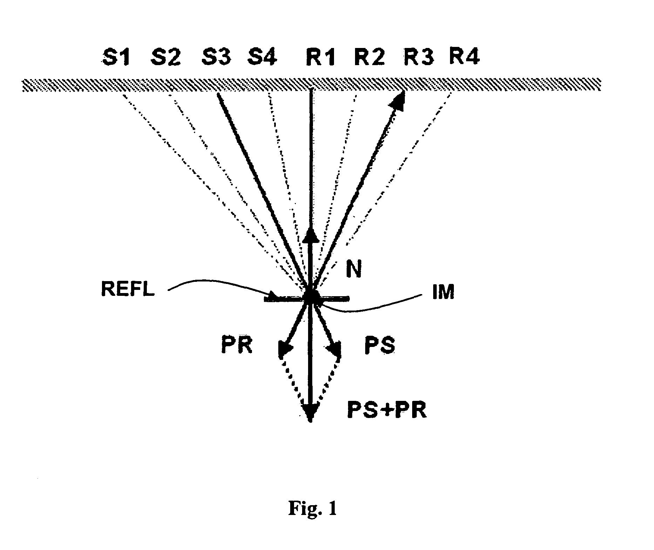

La figure 1 illustre la technique permettant de déterminer le couple source/récepteur spéculaire (S3 - R3) d'un point image considéré (IM) pour une classe : il s'agit du couple dont le pendage de migration (PS+PR) est le plus colinéaire possible à la normale (N) à la pente locale de l'événement interprété (REFL).

### Description détaillée

Pour mettre en oeuvre la technique de sismique réflexion, on utilise un dispositif d'acquisition sismique comportant classiquement des sources et récepteurs sismiques, ainsi qu'un laboratoire d'enregistrement des signaux sismiques. Les sources émettent des ondes sismiques se propageant dans le sous-sol, et l'ensemble de récepteurs sismiques, couplés avec le milieu, capte les ondes renvoyées par les discontinuités du sous-sol en réponse aux ondes émises. Enfin, le laboratoire d'enregistrement des signaux sismiques captés par les récepteurs permet de disposer d'enregistrements sismiques multi-déports.

On dispose également d'une représentation en vitesses du sous-sol. Cette représentation correspond à un modèle de vitesse, c'est à dire à une représentation géométrique du sous-sol discrétisée dans l'espace, à laquelle on associe à chaque point de discrétisation une valeur de vitesse des ondes sismiques.

Enfin, l'on dispose d'un algorithme de migration profondeur avant sommation de type Kirchhoff (e.g. Schneider, 1978), travaillant soit par classe de déport soit par classe d'angle.

A partir de l'information en temps relative au sous-sol (enregistrements sismiques multi-déports) et d'un premier modèle de vitesse du sous-sol, la méthode selon l'invention comporte alors les deux étapes majeures suivantes :
1. On réalise une migration en profondeur avant sommation de type Kirchhoff d'une sélection de points image, permettant d'accéder au pendage de migration des points.
2. On détermine les couples source/récepteur spéculaires associés aux dites images de ladite formation, à l'aide des pendages de migration.

La méthode selon l'invention est présentée à travers un premier mode de mise en oeuvre. Dans cette mise en oeuvre, l'on cherche à disposer d'informations permettant de connaître les coordonnées des sources et des récepteurs spéculaires associés à des points image d'une image migrée en profondeur avant sommation. Cette information spéculaire est la plus fondamentale, car on peut toujours, à partir de cette information et d'un outil de tracé de rayons, déduire d'autres quantités spéculaires pour les mêmes points image.

### 1- Migration en profondeur avant sommation

Un algorithme de migration en profondeur avant sommation de type Kirchhoff comporte deux phases : le calcul des fonctions de Green asymptotiques et la phase d'imagerie.

Après acquisition des données sismiques multi-déports, on réalise une migration en profondeur avant sommation de type Kirchhoff au cours de laquelle on effectue les étapes suivantes :
a) Lors de la phase de calcul des fonctions de Green asymptotiques, on conserve, pour chaque point image de l'image en profondeur, en plus des temps de trajet des rayons source/point image et récepteur/point image classiquement calculés, les paramètres de rais (vecteurs normaux au front d'ondes indiquant la direction de propagation des ondes) de chacun de ces rayons. On conserve également une information discriminante sur la position de toutes les sources et tous les récepteurs du dispositif d'acquisition. Cette information discriminante peut être, par exemple, leurs coordonnées spatiales ou encore leur numéro de référencement dans le dispositif d'acquisition.
b) Lors de la phase dite d'imagerie, on range les couples sources/récepteurs par classe d'angles ou de déports, selon le type de migration profondeur avant sommation choisi. Pour ce faire, on définit des classes en choisissant un intervalle de valeurs, par exemple la classe 1 correspond aux angles compris dans l'intervalle 0-5°, la classe 2 aux angles de l'intervalle 5°-10°... Puis, pour chacune de ces classes, on construit leur image en sommant les amplitudes associées aux sources et récepteurs appartenant à cette classe. On conserve alors l'information discriminante de l'étape a) uniquement pour les couples ainsi rangés. On conserve également le pendage de migration de ces couples. Comme l'illustre la figure 1, le pendage de migration d'un couple (S3, R3) est défini par la somme (PS+PR) des paramètres de rais (PS) source (S3)/point image (IM) et des paramètres de rais (PR) point image (IM)/récepteur (R3) de ce couple. Ces informations, pour chaque point image de chaque classe, seront par exemple stockées dans un fichier externe.

### 2- Détermination des sources et récepteurs spéculaires

c) Une fois la migration profondeur avant sommation terminée, on détermine pour chaque classe, les pentes locales des événements qui nous intéressent (événements sismiques correspondant à des réflexions impactant une des interfaces géologiques de la formation), pour une sélection de points image ou en tout point image de l'image migrée avant sommation (issue des images de classe). L'accès aux pentes locales pourra se faire par interprétation, manuelle ou automatique, des événements en question. Si on ne cherche à accéder à des informations spéculaires que pour une sélection de points image, on aura eu néanmoins soin d'également migrer les points directement voisins, de façon à pouvoir estimer les pentes locales aux points image choisis. La pente locale à chaque point image de chaque classe avant sommation interprété peut alors être stockée dans un fichier externe et ceci pour chaque collection offset ou angle choisie pour la migration.
d) Puis, à partir du fichier contenant les informations sur les couples source/récepteur ayant contribués aux points image des classes avant sommation considérées (étape b), et à partir de celui contenant les pentes locales aux points image considérés des classes considérées (étape c), on détermine le couple spéculaire. Pour ce faire, comme l'illustre la figure 1, on sélectionne pour chaque point image considéré (IM) de chaque classe considérée, le couple source/récepteur (S3 - R3) dont le pendage de migration (PS+PR) est le plus colinéaire possible à la normale (N) à la pente locale de l'événement interprété (REFL) au même point image de la même classe. L'information discriminante associée à ce couple spéculaire peut alors être stockée dans un fichier externe, et ce pour chaque point image de chacune des classes considérées.

Selon la méthode, on peut également obtenir d'autres informations spéculaires que de l'information discriminante sur la position des sources et récepteurs spéculaires associés à des points image du volume migré profondeur avant sommation. Il peut s'agir par exemple des temps de trajet, de dérivés partielles liées à ces temps de trajet, de vitesses, ... Dans ce cas, l'on procède de la façon suivante :
- lors de l'étape a) décrite précédemment, l'on calcule et conserve tout élément permettant d'accéder in fine à cette autre information ;
- lors de l'étape b) décrite précédemment, l'on calcule et l'on conserve l'information souhaitée ;
- lors de l'étape d) décrite précédemment, l'on extrait et l'on conserve cette information.

Selon un mode de réalisation, la méthode selon l'invention peut être utilisée dans le cadre de la mise à jour de modèle de vitesse d'une zone souterraine.

### Mise à jour d'un modèle de vitesse

Cette information discriminante sur les coordonnées des sources et des récepteurs spéculaires de l'image migrée profondeur avant sommation, peut alors être utilisée à des fins de mise à jour du modèle de vitesse, par exemple par méthode tomographique.

En tomographie temps avant sommation par exemple, les informations sur les coordonnées des sources et récepteurs spéculaires sont utilisées pour réaliser une démigration cinématique du volume migré avant sommation. Cette démigration s'effectue par tracé de rayons sur les événements interprétés et en utilisant le même modèle de vitesse que celui utilisé pour la migration profondeur avant sommation. On obtient ainsi les temps de trajet nécessaires à la tomographie temps avant sommation, qui permet de mettre à jour le modèle de vitesse.

En tomographie profondeur avant sommation, les informations sur les coordonnées des sources et récepteurs spéculaires sont également utilisées pour un tracé de rayons. On utilise le même modèle que celui utilisé pour la migration profondeur avant sommation, mais cette fois pour obtenir les dérivées partielles des temps de trajet par rapport au modèle de vitesse utilisé pour la migration. Ces quantités sont nécessaires à la mise à jour du modèle de vitesse. On trouvera une description du principe du tracé de rayons dans :
Jurado, F., Lailly, P., and Ehinger, A., (1998), "Fast 3D two-point raytracing for traveltime tomography", Proceedings of SPIE, Mathematical Methods in Geophysical Imaging V, 3453, 70-81.

### Autres mises en oeuvre de la méthode selon l'invention

La méthode selon l'invention permet donc d'accéder à tous types d'information spéculaires après une migration en profondeur avant sommation de type Kirchhoff. On a vu, par exemple, que l'information spéculaire relative à la position des sources et des récepteurs spéculaires permet de mettre à jour le modèle de vitesse de la zone souterraine étudiée à l'aide de méthodes telles que les méthodes tomographiques. En accédant à d'autres informations spéculaires, il est possible d'améliorer le processus de mise à jour des vitesses comme le montre les exemples d'applications suivants.

Dans le cas d'une mise en oeuvre de la méthode en vue d'une application de tomographie temps avant sommation, et pour une plus grande efficacité, on peut s'affranchir de l'étape de démigration cinématique. Pour ce faire, on accède directement, par la méthode selon l'invention, aux temps de trajet des rayons spéculaires associés aux sources et récepteurs spéculaires de différents points image pour différentes classes avant sommation. Ces temps de trajet sont évalués indépendamment de la méthode par l'algorithme de migration profondeur avant sommation de type Kirchhoff. Ainsi, il suffit de conserver, aux étapes a) et b), ces temps de trajet dans un fichier externe, en plus des paramètres de rais et de l'information discriminante sur la position des sources et récepteurs.

Dans le cas d'une mise en oeuvre de la méthode en vue d'une application de tomographie profondeur avant sommation, et pour une plus grande efficacité, on produit avantageusement, par la présente méthode, les dérivées partielles des temps de trajet par rapport au modèle de vitesse utilisé pour la mise en oeuvre de l'algorithme de migration profondeur avant sommation. Pour ce faire, il convient, lors de l'étape a), de calculer et conserver les dérivées partielles des rayons allant des sources et récepteurs du dispositif d'acquisition aux points image considérés pour les classes considérées. Puis, lors de l'étape b), il convient alors de calculer et stocker les dérivées partielles globales des couples source et récepteur retenus lors de l'étape d'imagerie de la migration, dérivées partielles globales qui seront calculées par sommation des dérivées partielles individuelles de l'étape a).

Selon une autre mise en oeuvre, en vue de limiter le coût en temps de calcul, les étapes a) à d) décrites précédemment peuvent être modifiées de la façon suivante :
a) les temps et paramètres de rais associés aux couples source/point image et récepteur/point image sont calculés et stockés pour une représentation décimée des points image et une représentation également décimée des sources et récepteurs du dispositif d'acquisition.
b) les quantités attachées aux triplets {source; point image; récepteur} sont calculées pour une décimation de points image et pour toutes les traces ayant contribuées à chacun de ces points image et ceci pour chaque classe avant sommation considérée. La reconstitution de l'information pour chaque trace réelle à partir d'une décimation en sources et récepteurs des fonctions de Green se fait par des interpolations (ou interpolation d'extrapolations à l'aide de quantités dites paraxiales) en usage dans l'imagerie de type Kirchhoff. L'information discriminante sur le couple source/récepteur, le pendage de migration ainsi que le temps de trajet de diffraction sont stockés dans un fichier externe pour une décimation de points image et pour toutes les traces ayant contribuées à chacun de ces points image et ceci pour chaque classe avant sommation considérée.
c) lors de l'étape d'imagerie proprement dite de l'algorithme de migration utilisé, ces mêmes quantités sont à nouveau interpolées (ou extrapolées) pour chaque point image à partir des points image décimés par une procédure que l'on notera « procédure d'interpolation noeuds grossiers - noeuds fins ». Les profondeurs et pendages associés aux horizons interprétés sur l'image migrée ainsi formée sont stockés dans un fichier externe, pour chaque classe avant sommation, comme décrit dans l'étape c) du cas général.
d) puis on reconstitue, à partir du fichier créé à l'étape b) pour des points image décimés, les quantités information discriminante, pendage et temps de diffraction qui correspondent aux points image des événements interprétés à la fin de l'étape c). Pour conserver la cohérence de l'approche, ces quantités sont alors interpolées par la « procédure d'interpolation noeuds grossiers - noeuds fins » utilisée pour la migration à l'étape c. L'interpolation effectuée, on produit selon la procédure décrite dans l'étape d) du cas général, l'information discriminante des couples source/récepteur spéculaires pour chaque point image interprété de chaque classe avant sommation considérée.

Ainsi, la méthode selon l'invention permet d'accéder aux couples sources/récepteurs spéculaires, ainsi qu'à toutes informations spéculaires, après une étape de migration en profondeur avant sommation de type Kirchhoff. Grâce à ces données spéculaires, il est possible de mettre à jours le modèle de vitesse à l'aide de techniques telles que les techniques tomographiques. La méthode permet également, en accédant à des données spéculaires autres que la position des sources et récepteurs spéculaires, d'accélérer et simplifier le processus de mise à jours du modèle de vitesse par technique tomographique.

## Revendications

1. Méthode permettant de déterminer les couples sources/récepteurs spéculaires associés à des points image issus d'images d'une formation souterraine obtenues à partir d'enregistrements multi-déports en fonction du temps d'ondes sismiques, émises et captées par un dispositif d'acquisition comprenant des sources sismiques et des récepteurs sismiques couplés en surface avec ladite formation souterraine, ces ondes sismiques étant réfléchies par des interfaces géologiques de ladite formation, la méthode étant **caractérisée en ce qu'**elle comporte les étapes suivantes :
a) on définit une sélection de points image desdites images de ladite formation comprenant au moins un point image et ses voisins;
b) on réalise une migration en profondeur avant sommation pour ladite sélection de points image dans laquelle l'on détermine et l'on stocke des données relatives aux sources et récepteurs dudit dispositif d'acquisition ainsi que les paramètres de rais des rayons définis entre tous couples source/point image et les paramètres de rais des rayons définis entre tous couples récepteur/point image ;
et, pour au moins un point image de ladite sélection on réalise les étapes suivantes :
c) on détermine, pour ledit point image, la pente locale d'au moins un événement sismique correspondant à des réflexions impactant une desdites interfaces géologiques de ladite formation ;
d) on détermine les couples source/récepteur spéculaires associés audit point image, en comparant ladite pente locale associée audit point image audits paramètres de rais associés audit point image.

2. Méthode selon la revendication 1, dans laquelle on détermine les couples source/récepteur spéculaires associés audit point image, en sélectionnant parmi tous les couples source/récepteur du dispositif d'acquisition ceux dont le vecteur formé par la somme des paramètres de rais associés audit point image (pendage de migration) est le plus colinéaire à la normale à ladite pente locale associée audit point image.

3. Méthode selon l'une des revendications précédentes, dans laquelle les données stockées au cours de ladite migration (étape b) comportent au moins l'une des informations suivantes :
- les temps de trajets des rayons définis entre tous couples source/point image et tous couples récepteur/point image ;
- les coordonnées des sources et récepteurs du dispositif d'acquisition ;
- pour tous points image, les pendages de migration associés aux couples source/récepteur ayant contribués à l'imagerie du point image ;
- les dérivées partielles desdits temps de trajet par rapport à un modèle de vitesse utilisé pour la mise en oeuvre de l'algorithme de migration profondeur avant sommation ;
- toutes combinaisons de ces données.

4. Méthode selon l'une des revendications précédentes, dans laquelle les données stockées au cours de ladite migration (étape b) sont associées à chaque couple spéculaire et stockées à l'étape d).

5. Méthode selon la revendication 1, dans laquelle on détermine lesdites pentes locales à partir d'une interprétation dudit événement sismique.

6. Méthode selon l'une des revendications précédentes, dans laquelle lesdits paramètres de rais et lesdites données relatives aux sources et récepteurs dudit dispositif sont calculés et stockés pour une représentation décimée des points image et une représentation également décimée des sources et récepteurs du dispositif d'acquisition.

7. Méthode selon la revendication 6, dans laquelle on reconstitue l'ensemble desdits paramètres de rais et lesdites données relatives aux sources et récepteurs dudit dispositif à partir d'interpolations et/ou d'extrapolations.

8. Application de la méthode selon l'une des revendications précédentes, à la mise à jour d'un modèle de répartition des vitesses de propagation desdites ondes sismiques dans ladite zone souterraine.

9. Méthode selon la revendication 8, dans laquelle on utilise une technique de tomographie en profondeur pour mettre à jour le modèle.

10. Méthode selon la revendication 8, dans laquelle on utilise une technique de tomographie en temps pour mettre à jour le modèle.

11. Méthode selon la revendication 9, dans laquelle on détermine les dérivées partielles desdits temps de trajet par rapport à un modèle de vitesse utilisé pour la mise en oeuvre de l'algorithme de migration profondeur avant sommation, nécessaires à ladite technique de tomographie en profondeur, en évaluant et en stockant l'information sur les dérivées à l'étape b).

12. Méthode selon la revendication 10, dans laquelle on détermine les temps de trajet nécessaires à ladite technique de tomographie en temps en stockant l'information sur les temps de trajet à l'étape b).

## Claims

1. A method enabling the determination of the specular source/receptor pairs associated with image points originating from images of a subsurface formation obtained from multi-offset recordals according to the timing of seismic waves emitted and captured by an acquisition device including seismic sources and seismic receptors coupled at the surface with said subsurface formation, these seismic waves being reflected by geological interfaces of said formation, the method being **characterised in that** it comprises the following steps:
a) a selection of image points of said images of said formation are defined, including at least one image point and its neighbouring points;
b) a depth migration is carried out before summation for said selection of image points, wherein there is determined and stored data relating to the sources and receptors of said acquisition device as well as the parameters of rays of the beams defined between all of the source/image point pairs and the parameters of rays of the beams defined between all of the receptor/image point pairs;
and, for at least one image point of said selection, the following steps are carried out:
c) there is determined, for said image point, the local inclination of at least one seismic event corresponding to reflections impacting on one of said geological interfaces of said formation;
d) the specular source/receptor pairs associated with said image point are determined by comparing said local inclination associated with said image point with said parameters of rays associated with said image point.

2. The method according to Claim 1, wherein the specular source/receptor pairs associated with said image point are determined by selecting from all of the source/receptor pairs of the acquisition device those for which the vector formed by the sum of the parameters of rays associated with said image point (migration dip) is the most co-linear with the normal to said local inclination associated with said image point.

3. The method according to one of the preceding claims, wherein the data stored in the course of said migration (Step b) comprises at least one of the following items of information:
- the transit times of the beams defined between all of the source/image point pairs and all of the receptor/image point pairs;
- the co-ordinates of the sources and receptors of the acquisition device;
- for all of the image points, the migration dips associated with the source/receptor pairs which have contributed to the imagery of the image point;
- the partial derivatives of said transit times with respect to a speed model used for the implementation of the depth migration algorithm before summation;
- all combinations of this data.

4. The method according to one of the preceding claims, wherein the data stored in the course of said migration (Step b) is associated with each specular pair and stored at Step d).

5. The method according to Claim 1, wherein said local inclinations are determined from an interpretation of said seismic event.

6. The method according to one of the preceding claims, wherein said parameters of rays and said data relating to the sources and receptors of said device are calculated and stored for a representation which is decimated of the image points and a representation which is also decimated of the sources and receptors of the acqusition device.

7. The method according to Claim 6, wherein all of said parameters of rays and said data relating to the sources and receptors of said device are re-constituted from interpolations and/or extrapolations.

8. An application of the method according to one of the preceding claims to the updating of a distribution model of the propagation speeds of said seismic waves in said subsurface zone.

9. The method according to Claim 8, wherein a depth tomography technique is used in order to update the model.

10. The method according to Claim 8, wherein a temporal tomography technique is used in order to update the model.

11. The method according to Claim 9, wherein the partial derivatives of said transit times are determined with respect to a speed model used for the implementation of the depth migration algorithm before summation, required for said depth tomography technique, by evaluating and storing the information on the derivatives at Step b).

12. The method according to Claim 10, wherein the transit times required for said temporal tomography technique are determined by storing the information on the transit times at Step b).

## Patentansprüche

1. Verfahren, das es erlaubt, Reflexions/Quellen-Empfängerpaare zu bestimmen, die mit Bildpunkten verbunden sind, die aus Bildern einer unterirdischen Formation stammen, die ausgehend von zeitabhängigen Multiversatz-Aufzeichnungen seismischer Wellen erzielt werden, die von einer Erfassungsvorrichtung gesendet und erfasst werden, die seismische Quellen und seismische Empfänger aufweist, die auf der Oberfläche mit der unterirdischen Formation gekoppelt sind, wobei diese seismischen Wellen von geologischen Schnittstellen der Formation reflektiert werden, wobei das Verfahren **dadurch gekennzeichnet ist, dass** es die folgenden Schritte aufweist:
a) man definiert eine Auswahl von Bildpunkten aus den Bildern der Formation, die mindestens einen Bildpunkt und seine Nachbarn aufweist,
b) man führt eine Tiefenmigration vor Summierung für die Bildpunkteauswahl durch, in der man Daten in Zusammenhang mit den Quellen und Empfängern der Erfassungsvorrichtung bestimmt und speichert sowie die Parameter von Einzelstrahlen, die unter allen Quellen-/Bildpunktpaaren definiert sind, und die Parameter von Einzelstrahlen, die unter allen Empfänger-/Bildpunktpaaren definiert sind;
und für mindestens einen Bildpunkt der Auswahl führt man die folgenden Schritte durch:
c) man bestimmt für den Bildpunkt die lokale Neigung mindestens eines seismischen Ereignisses, das Reflexionen entspricht, die auf eine der geologischen Schnittstellen der Formation auftreffen;
d) man bestimmt die Reflexions/Quellen-Empfängerpaare, die mit dem Bildpunkt verbunden sind, indem man die lokale Neigung, die mit dem Bildpunkt verbunden ist, mit den Parametern von Einzelstrahlen, die mit dem Bildpunkt verbunden sind, vergleicht.

2. Verfahren nach Anspruch 1, bei dem man die Reflexions/QuellenEmpfängerpaare, die mit dem Bildpunkt verbunden sind, bestimmt, indem man aus allen Quellen-Empfängerpaaren der Erfassungsvorrichtung diejenigen auswählt, deren Vektor, der aus der Summe der Parameter von Einzelstrahlen, die mit dem Bildpunkt verbunden sind, gebildet wird (Migrationsneigung), der ist, der zur Senkrechten zu der lokalen Neigung, die mit dem Bildpunkt verbunden ist, am kollinearsten ist.

3. Verfahren nach einem der vorhergehenden Ansprüche, bei denen die Daten, die bei der Migration (Schritt b) gespeichert werden, mindestens eine der folgenden Informationen aufweisen:
- die Laufzeiten der Strahlen, die zwischen allen Quellen-/Bildpunktpaaren und allen Empfänger-/Bildpunktpaaren definiert sind;
- die Koordinaten der Quellen und Empfänger der Erfassungsvorrichtung;
- für alle Bildpunkte die Migrationsneigungen, die mit den Quellen-/Empfängerpaaren, die zu der Bildherstellung des Bildpunkts beigetragen haben, verbunden sind;
- die teilweisen Ableitungen der Laufzeiten im Vergleich zu einem Geschwindigkeitsmodell, das zum Umsetzen des Tiefenmigrationsalgorithmus vor dem Summieren verwendet wurde;
- alle Kombinationen dieser Daten.

4. Verfahren nach einem der vorhergehenden Ansprüche, bei dem die im Laufe der Migration (Schritt b) gespeicherten Daten mit jedem Reflexionspaar verbunden und im Schritt d) gespeichert werden.

5. Verfahren nach Anspruch 1, bei dem man die lokalen Neigungen ausgehend von einer Auslegung des seismischen Ereignisses bestimmt.

6. Verfahren nach einem der vorhergehenden Ansprüche, bei dem die Parameter von Einzelstrahlen und die Daten in Zusammenhang mit den Quellen und Empfängern der Vorrichtung für eine dezimierte Darstellung der Bildpunkte und eine ebenfalls dezimierte Darstellung der Quellen und Empfänger der Erfassungsvorrichtung berechnet und gespeichert werden.

7. Verfahren nach Anspruch 6, bei dem man die Einheit der Parameter von Einzelstrahlen und die Daten in Zusammenhang mit den Quellen und Empfängern der Vorrichtung ausgehend von Interpolationen und/öder Extrapolationen rekonstituiert.

8. Anwendung des Verfahrens nach einem der vorhergehenden Ansprüche an das Aktualisieren eines Verteilungsmodells der Ausbreitungsgeschwindigkeiten der seismischen Wellen in der unterirdischen Zone.

9. Verfahren nach Anspruch 8, bei dem man eine Tiefentomographietechnik verwendet, um das Modell zu aktualisieren.

10. Verfahren nach Anspruch 8, bei dem man eine Zeit-Tomographietechnik verwendet, um das Modell zu aktualisieren.

11. Verfahren nach Anspruch 9, bei dem man die teilweisen Ableitungen der Laufzeiten in Bezug auf ein Geschwindigkeitsmodell zum Umsetzen des Tiefenmigrationsalgorithmus vor Summieren bestimmt, die für die Tiefentomographietechnik erforderlich sind, indem man die Information über die Ableitungen im Schritt b) bewertet und speichert.

12. Verfahren nach Anspruch 10, bei dem man die für die Zeit-Tomographietechnik erforderlichen Laufzeiten bestimmt, indem man die Information über die Laufzeiten im Schritt b) speichert.
